# EUROPEAN PATENT SPECIFICATION

(11) **EP 2 361 508 B1**
(45) Date of publication and mention of the grant of the patent: **27.06.2018**
(21) Application number: 09829979.5
(22) Date of filing: 23.09.2009
(51) Int. Cl.: A23K 40/00, A23K 20/20, A23K 10/16, A23K 50/60, A23K 50/75, A23K 50/30

(54) **FEED PREMIX CONTAINING MULTIPLE TRACE ELEMENTS AND PREPARING METHOD THEREOF**
FUTTERVORMISCHUNG MIT MEHREREN SPURENELEMENTEN UND VERFAHREN ZU IHRER HERSTELLUNG
PRÉMÉLANGE ALIMENTAIRE CONTENANT DE MULTIPLES OLIGO-ÉLÉMENTS ET SON PROCÉDÉ DE PRÉPARATION

(30) Priority: 02.12.2008 CN 200810180771
(43) Date of publication of application: 31.08.2011
(73) Proprietor: Angel Yeast Co., Ltd., Hubei 443003 (CN)
(72) Inventor: YU, Xuefeng, Yichang Hubei 443003 (CN); LI, Zhihong, Yichang Hubei 443003 (CN); YU, Minghua, Yichang Hubei 443003 (CN); YAO, Juan, Yichang Hubei 443003 (CN); TAN, Bin, Yichang Hubei 443003 (CN)
(74) Representative: Croce, Valeria
(86) International application number: PCT/CN2009/074136
(87) International publication number: WO 2010/063195

(56) References cited:
- CN-A- 1 312 238
- CN-A- 1 423 959
- CN-C- 1 210 208
- FR-A1- 2 351 607
- IT-B- 1 141 664
- JP-A- 2003 277 273
- US-A- 3 772 152
- US-A1- 2007 269 495
- TANGULER H ET AL: "Utilisation of spent brewer's yeast for yeast extract production by autolysis: The effect of temperature", FOOD AND BIOPRODUCTS PROCESSING, INSTITUTION OF CHEMICAL ENGINEERS, RUGBY, GB, vol. 86, no. 4, 1 December 2008 (2008-12-01), pages 317-321, XP025745083, ISSN: 0960-3085 [retrieved on 2007-11-28]
- VRVIC, M.M. AND MATIC, V. F.: "Biotechnological production of organically bonded oligo and trace elements (EOTEs): From conventional toward modern biotechnology", MIKROBIOLOGIJA, vol. 43, no. 1, 2006, pages 1-14, XP002673696, BEOGRAD ISSN: 0581-1538

## Description

### FIELD OF THE INVENTION

The invention relates to a feed addictive, more particularly, to a premix containing trace elements and yeast autolysate. The invention is defined by the claims.

### BACKGROUND OF THE INVENTION

Multiple trace elements are essential for animal growth, therefore it is required to add appropriate amount of multiple trace elements to feed. Currently, there are mainly two methods for adding the trace elements, one of which is inorganic premix of trace elements, i.e. mixing inorganic salts according to certain formula based on actual animal needs, then adding the premix to feed for fulfilling animals' physiological needs, e.g. the method described in The Preparing of Copper-yeast Powder Feed Addictive for Pig, by Li Sanqiang, et al, Acta Agriculturae Boreali-occidentalis Sinica, 1993, 2(4): p 85 - 88. The second is organic products containing single trace element, e.g. amino acid chelate zinc glycinate, ferrous methionine, and the like.

Using such a method, by single addition or combination of inorganic trace element into the premix, a product with higher quality than premix containing all the inorganic trace elements is obtained.

One of the disadvantages in the first method above-mentioned is that, the animal absorptivity of the trace elements in inorganic form tends to be low, since most of the trace elements of this kind finally are made into the environments by defecation, resulting in both drain of trace elements and harm to the environments. There are also disadvantages in the second method above-mentioned. In view of increasing absorptivity, organic products containing trace elements are developed with higher absorptivity and thus mitigating environmental harm. However, the higher cost of producing these organic products containing single trace element with high purity restrains badly the application.

The publication of Tanguler H et al (Food and bioproducts processing, Insitution of Chemical Engineers, Rugby, GB, vol. 86, no.4, 1 December 2008, pages 317-321 and the prior-art document IT 1141664 disclose methods for the preparation of a feed premix wherein there are no added copper, iron, manganese and zinc elements.

The document US 3.772.152 (DE BAYNAST R) and FR 2.351.607 (ADOLPHE MAURICE [FR]) disclose methods wherein the portions of the trace elements are not determined based on feeding standards for different animals in different physiological periods.

As far as the publication of Vrvic, M.M. and Matic, V.F. (Mikrobiologija, vol.43, no.1, 2006, pages 1-14, BEOGRAD) is concerned, it discloses the preparation of a feed premix wherein only iron and zinc as elements are added and wherein the portions of the trace elements are not determined based on feeding standards for different animals in different physiological periods.

Prior-art document CN1210208 discloses the preparation of an animal feed supplement wherein iron, manganese, zinc and copper are added but in different batches.

The patent application US 2007/269495 discloses a method for enhancing a mineral level in an animal comprising the administration of a metal amino acid chelate to the animal.

### DISCLOSURE OF THE INVENTION

An object of this invention is to provide a feed premix containing multiple trace elements and with higher absorptivity of animal.

The premix provided by this invention is formed by a certain reaction of several trace elements and a yeast autolysate, wherein the reaction is realized by the reacting of the salts of the said trace elements with the said yeast autolysate under the condition of pH 3.0-6.0 and temperature of 40-100°C. The products are being formulated in terms of the four sorts of elements based on the national feeding standards for different animals in different physiological periods, thus the needs of animals for multiple trace elements are being met, with higher absorptivity and mitigated harm to the environments. In the mean time, these products are not the traditional onescontaining pure organic trace element, thus the cost thereof is significantly reduced.

### EMBODIMENTS

In one aspect of the invention, a feed premix containing a yeast autolysate and multiple trace elements is provided according to the appended claims 7 and 8. The said trace elements include copper, iron, manganese and zinc. The invention characterizes in that these elements are not contained by simple mixture in the premix of the invention, in fact, the four elements are formulated based on the national feeding standards for different animals in different physiological periods. Then through the reaction of the trace elements and the yeast autolysate, highly absorbable compound trace elements are being produced, so as to facilitate animal absorption.

Raw materials used in the invention include yeast autolysis solution and trace elements, such as copper, iron, manganese, and zinc. The said yeast autolysis solution includes autolysis solution derived from active yeast and inactive yeast, and the yeast includes but is not limited to Saccharomyces cerevisiae, baker's yeast and Candida, the crude protein in dry matter of the said yeast autolysis solution used varies from 30% to 65%.

Trace elements in the said premix are generally introduced in the form of salts, such as sulfates, carbonates, hydrochlorides, phosphates, hydrogen phosphates (monohydrogen phosphates or dihydrogen phosphates), and basic carbonates. In the invention, sulfates and hydrochlorides are preferably used.

Although the mechanism of reaction of yeast autolysate and the said inorganic trace elements is yet unknown, and no reliable analytic methods have been developed to measure the combination of the trace elements and the yeast autolysate, it is found through experiments that, compared with simple inorganic mixture, the premix containing multiple trace elements provided by the invention has an evident advantage, i.e. an increased bioavailability.

When preparing yeast autolysate premix, a predefined amount of the said salts of trace elements may be directly added to the yeast autolysis solution through autolysis treatment, and the pH and concentration of the mixture may be adjusted by water and acid/alkali, and the reaction maintains a period of time under appropriate temperature. The salt of trace element may also be added in the form of solution.

Autolysis method of yeast is known in the art. The reaction for preparing the premix of the invention is conducted according to the appended claim 1 and in alternative embodiments according to claims 2 to 6.

The proportions of the trace elements used in the invention, i.e. copper, iron, manganese, and zinc, are adjusted upon nutritional needs of different animals. For example, in the premix special for broiler chickens of 0-4 weeks, the proportions of copper, iron, manganese and zinc are respectively 8mg/kg, 80 mg/kg, 60 mg/kg, and 40 mg/kg; and in the premix special for growing pigs of 10-20 kg, the proportions of the said four elements are 5mg/kg, 80 mg/kg, 3 mg/kg, and 80 mg/kg. In other types of premix containing yeast autolysate and compound trace elements, the proportions of copper, iron, manganese and zinc are determined based on the national feeding standards for various animals.

### EXAMPLES

The detailed method is elaborated by the following example of production of premix counting for 1% in the special feed for broiler chicken of 0-4 weeks. In this example, the inorganic salt used is sulfate, and the strain of the yeast autolysis solution used is active beer yeast (with crude protein of 45%). The target amount of the product is 1,000 kg.

The proportions of copper, iron, manganese and zinc in the feed formula are 8mg/kg, 80 mg/kg, 60 mg/kg, and 40 mg/kg respectively. Since the premix counts for 1% by weight when mixing with the feed, the proportions of copper, iron, manganese and zinc in the feed formula are then 800mg/kg, 8000 mg/kg, 6000 mg/kg, and 4000 mg/kg respectively. Therefore, the proportions of raw materials, i.e. copper sulfate, ferrous sulfate, manganese sulfate and zinc sulfate, are 1969 mg/kg, 21,714 mg/kg, 16,472 mg/kg, 9,908 mg/kg respectively, and 0.20%, 2.17%, 1.65%, and 0.99% respectively if converted in percentage. Then the raw materials of the yeast autolysate dry matter used counts for 1-0.20%-2.17%-1.65%-0.99%=94.99%. The yeast autolysate dry matter needed for producing 1,000 kg products is 1000 × 94.99%=949.9kg. The needed amounts of copper sulfate (heptahydrate), ferrous sulfate (heptahydrate), manganese sulfate (heptahydrate) and zinc sulfate (pentahydrite) are respectively 1000×0.20%×(18×7+160)/160=3.58 kg, 1000× 2.17%×(18×7+152)/152=39.69 kg, 1000×1.65%×(18×7+151)/151=30.27 kg, and 1000×0.99%×(18×5+161)/161=15.43 kg.

9.5 m³ of yeast autolysis solution containing 10% of dry matter (approximately 949.9 kg of dry matter contained) is measured and put in the reactor, 3.58 kg of copper sulfate (heptahydrate), 39.69 kg of ferrous sulfate (heptahydrate), 30.27 kg of manganese sulfate (heptahydrate) and 15.43 kg of zinc sulfate (pentahydrite) are added, with full agitation. The pH is adjusted to 4.0 by using sulfuric acid. The temperature is then increased to 55 and the reaction is initiated and lasts for 4 hours with agitation. Then the temperature is increased to 90 and the reaction lasts for another 1 hour. After spray drying, the powder products needed are obtained.

### EFFECT TEST

### 1.1 Design of Test

It is designed to be a single factor test with 2 treatment groups and 5 repetitions. The 2 treatment groups are control group and experimental group. The control group uses basal diet, in which the proportions of copper, iron, manganese and zinc are respectively 8 mg/kg, 80 mg/kg, 60 mg/kg and 40 mg/kg. The four trace elements are in form of inorganic sulfate. The experimental group uses the yeast autolysate premix special for broiler chicken of 0-4 weeks produced in the above example 1, for substitution of the trace elements, i.e. copper, iron, manganese and zinc, in the basal diet. The proportions of copper, iron, manganese and zinc in the overall feed for experimental group are 8 mg/kg, 80 mg/kg, 60 mg/kg and 40 mg/kg.

### 1.2 Testing Animal

100 healthy Avian 0 day-age broiler chickens are divided into 2 groups on a random basis. 5 repetitions are set for each group, and each repetition applies to 10 chickens.

### 1.3 Testing Feed and Management

### 1.3.1 Testing Feed: The composition of testing feed and its nutritional level are shown in the table 1 below.

**Table 1 Composition of Basal diet and Nutritional Level**

| Raw Materials | Proportion by Weight (%) | Nutritional Level | |
|---|---|---|---|
| Maize | 65.00 | Metabolizable Energy Mcal/kg | 2.930 |
| Soybean Meal | 26.23 | Crude Protein % | 20.94 |
| Fish Meal | 5.99 | Calcium % | 1.00 |
| Methionine | 0.16 | Available Phosphorus % | 0.45 |
| Salt | 0.25 | Lysine % | 1.20 |
| Stone Powder | 1.14 | Methionine % | 0.52 |
| CaHPO₄ | 1.22 | | |

### 1.3.2 Feeding Management

The test lasts for 3 weeks. Prior to the test, the chicken houses, coops, water tanks and feed tanks are being sterilized and immunized by following the immunization procedure.

### 1.4 Sampling Time

Broiler chickens of 21 day-age, on the 22^{nd} day morning, without feeding, are being weighted, blood-collected and then sampled.

### 1.5 Test Indicators

### 1.5.1 Content of Trace Elements in the Kidney

### 1.5.2 Relative Bioavailability of Trace Elements

### 1.5.3 Daily Weight Gain

### 1.5.4 Feed-Gain Ratio

### Results and Analysis (Table 2)

**Table 2 Test Results**

| | Control Group | Experimental Group |
|---|---|---|
| Copper in the Kidney (mg/kg) | 36.76 | 38.20 |
| Relative Bioavailability of Copper (%, Kidney) | 100 | 103.9 |
| Iron in the Kidney (mg/kg) | 275.68 | 312.44 |
| Relative Bioavailability of Iron (%, Kidney) | 100 | 113.3 |
| Manganese in the Kidney (mg/kg) | 6.86 | 9.9 |
| Relative Bioavailability of Manganese (%, Kidney) | 100 | 144.3 |
| Zinc in the Kidney (mg/kg) | 112.38 | 132.33 |
| Relative Bioavailability of Zinc (%, Kidney) | 100 | 117.8 |
| Daily Weight Gain (g/d) | 25.93 | 28.07 |
| Feed-Gain Ratio | 1.85 | 1.74 |

Based on the results described above, the conclusion goes that, by using the product of the invention, the bioavailability of the trace elements, i.e. copper, iron, manganese, and zinc, for the broiler chickens could be effectively improved, and the daily weight gain of experimental group is increased while the feed-gain ration is decreased.

According to the invention, by the reaction of multiple trace elements of particular proportions and yeast autolysate, a yeast autolysate compound premix product containing multiple trace elements of particular proportions is obtained. The product with high absorptivity of trace elements could provide multiple trace elements, at the same time it is easy to produce with quite low costs. By adjusting the proportions of the trace elements, various yeast autolysate premixes with compound trace elements are obtained to meet various actual needs from different animals.

For example, many sorts of the products, such as yeast autolysate premix with compound trace elements special for piglets, growing pigs, fattening pigs, sows, meat poultry and egg-fowls, could be produced by the method of the invention.

In general, the product by the method according to the invention is featured of combining compound trace elements with compound amino acid and small peptide, and it provides better digestibility over traditional trace elements. In the mean time, the product provides a premix with particular proportions of trace elements, and complete feed could be produced by direct incorporation in proportions.

## Claims

1. A method for preparing a feed premix containing multiple trace elements, comprising the steps of:
a. providing salts solution containing trace elements of copper, iron, manganese and zinc,
b. providing solution of a yeast autolysate,
c. mixing the said solution obtained from steps (a) and (b), and
reacting the said solution containing trace elements with said yeast autolysate under pH 3.0-6.0 and the temperature of 40-100°C so as to convert said trace elements into the form of organic compounds;
wherein, proportions of said trace elements of copper, iron, manganese and zinc are determined based on feeding standards for different animals in different physiological periods; said reaction contains two steps: reacting for 10-600 minutes under the temperature of 40-70°C; and reacting for 10-600 minutes under the temperature of 70-100°C; the concentration of the autolysis solution is 10 - 15%.

2. The method according to claim 1, wherein said salts of the trace elements are selected from sulfates, carbonates, hydrochlorides, phosphate, hydrogen phosphates (monohydrogen phosphates or dihydrogen phosphates), basic carbonates, acetates or stearate.

3. The method according to claim 1 or 2, which is for broiler chicken of 0-4 weeks, wherein the concentration of copper, iron, manganese and zinc in the reacting substance of step (c) are respectively: 8 mg/kg, 80 mg/kg, 60 mg/kg and 40 mg/kg.

4. The method according to claim 1, wherein the solution of a yeast autolysate of step (b) is derived from active and inactive yeast selected from *Saccharomyces cerevisiae,* baker's yeast and *Candida.*

5. The method according to claim 4, wherein the dry matter of said solution of a yeast autolysate comprises 30-65% of crude protein.

6. A feed premix obtained from the process of anyone of the preceding claims.

## Patentansprüche

1. Verfahren zum Herstellen einer Futtermittelvormischung, enthaltend zahlreiche Spurenelemente, umfassend die Schritte:
a. zur Verfügung stellen einer Salzlösung, die Spurenelemente von Kupfer, Eisen, Mangan und Zink enthält,
b. zur Verfügung stellen einer Lösung eines Hefe-Autolysats,
c. Mischen der Lösung erhalten aus Schritten (a) und (b), und
Reagieren der Lösung, die Spurenelemente enthält, mit dem Hefe-Autolysat bei pH 3,0 - 6,0 und bei der Temperatur von 40 - 100°C um die Spurenelemente in die Form von organischen Verbindungen umzuwandeln;
wobei Anteile der Spurenelemente von Kupfer, Eisen, Mangan und Zink basierend auf Fütterungsstandards für verschiedene Tier in verschiedenen physiologischen Phasen bestimmt werden; wobei die Reaktion zwei Schritte enthält: Reagieren für 10 - 600 Minuten bei der Temperatur von 40 - 70°C; und Reagieren für 10 - 600 Minuten bei der Temperatur von 70 - 100°C; wobei die Konzentration der Autolyse-Lösung 10 - 15 % ist.

2. Verfahren nach Anspruch 1, wobei die Salze der Spurenelemente ausgewählt sind aus Sulfaten, Carbonaten, Hydrochloriden, Phosphat, Hydrogenphosphaten (Monohydrogenphosphaten oder Dihydrogenphosphaten), basischen Carbonaten, Acetaten oder Stearat.

3. Verfahren nach Anspruch 1 oder 2, welches für Masthähnchen mit 0-4 Wochen ist, wobei die Konzentration an Kupfer, Eisen, Mangan und Zink in der reagierenden Substanz aus Schritt (c) 8 mg/kg, 80 mg/kg, 60 mg/kg bzw. 40 mg/kg ist.

4. Verfahren nach Anspruch 1, wobei die Lösung eines Hefe-Autolysats aus Schritt (b) von aktiver und inaktiver Hefe abgeleitet ist, ausgewählt aus *Saccharomyces cerevisiae,* Bäckerhefe und *Candida.*

5. Verfahren nach Anspruch 4, wobei die Trockenmasse der Lösung eines Hefe-Autolysats 30 - 65 % an Rohprotein umfasst.

6. Futtermittelvormischung, erhalten aus dem Prozess nach einem der vorhergehenden Ansprüche.

## Revendications

1. Procédé de préparation d'un prémélange alimentaire contenant de multiples oligo-éléments, comprenant l'étape de :
a. fourniture d'une solution saline contenant des oligo-éléments de cuivre, de fer, de manganèse et de zinc,
b. fourniture d'une solution d'un autolysat de levure,
c. mélange de ladite solution obtenue à partie des étapes (a) et (b), et
réaction de ladite solution contenant des oligo-éléments avec ledit autolysat de levure à un pH de 3,0 à 6,0 et à la température de 40 à 100 °C de façon à convertir lesdits oligo-éléments sous la forme de composés organiques ;
dans lequel des proportions desdits oligo-éléments de cuivre, de fer, de manganèse et de zinc sont déterminées sur la base de normes alimentaires pour différents animaux dans différentes périodes physiologiques ; ladite réaction contient deux étapes : la réaction pendant 10 à 600 minutes à la température de 40 à 70 °C ; et la réaction pendant 10 à 600 minutes à la température de 70 à 100 °C ; la concentration de la solution d'autolyse est de 10 à 15 %.

2. Procédé selon la revendication 1, dans lequel lesdits sels des oligo-éléments sont choisis parmi des sulfates, des carbonates, des chlorhydrates, des phosphates, des hydrogénophosphates (phosphates de monohydrogène ou phosphates de dihydrogène), des carbonates, des acétates ou des stéarates basiques.

3. Procédé selon la revendication 1 ou 2, qui est destiné aux poulets à griller de 0 à 4 semaines, dans lequel les concentrations de cuivre, de fer, de manganèse et de zinc dans la réaction de la substance réactionnelle de l'étape (c) sont respectivement de : 8 mg/kg, 80 mg/kg, 60 mg/kg et 40 mg/kg.

4. Procédé selon la revendication 1, dans lequel la solution d'un autolysat de levure de l'étape (b) provient de levures actives et inactives sélectionnées parmi *Saccharomyces cerevisiae*, la levure de boulanger et *Candida.*

5. Procédé selon la revendication 4, dans lequel la matière sèche de ladite solution d'un autolysat de levure comprend 30 à 65 % de protéine brute.

6. Prémélange alimentaire obtenu à partir du processus selon l'une quelconque des revendications précédentes.
